# EUROPÄISCHE PATENTANMELDUNG

(11) **EP 1 416 208 A1**
(43) Veröffentlichungstag der Anmeldung: **06.05.2004**
(21) Anmeldenummer: 03078347.6
(22) Anmeldetag: 23.10.2003
(51) Int. Cl.: F16K 31/40

(54) **Axialventil**

(30) Priorität: 31.10.2002 DE 10251167
(71) Anmelder: Danfoss A/S, 6430 Nordborg (DK)
(72) Erfinder: Larsen, Soren Michael, 5210 Odense NV (DK); Birkelund, Michael, 5500 Middelfart (DK); Jorgensen, Erik Casper, 8660 Skanderborg (DK)

(57) **Zusammenfassung**

Es wird ein Axialventil angegeben mit einem Gehäuse (2), einem Eingang (3), einem Ausgang (4), einem Ventilsitz (5) zwischen Eingang (3) und Ausgang (4) und einem mit dem Ventilsitz (5) zusammenwirkenden Ventilelement (6), das durch ein zwischen dem Eingang (3) und dem Ausgang (4) angeordnetes Pilotventil (20) gesteuert ist, wobei das Ventilelement (6) parallel zu einem Strömungspfad vom Eingang (3) zum Ausgang (4) bewegbar ist und einen Innenraum (7) umgibt.

Man möchte bei unveränderten Außenabmessungen einen vergrößerten Durchfluß erreichen.

Hierzu ist ein erster Abschnitt des Strömungspfads durch den Innenraum (7) geführt und ein Druckraum (17), in dem sich bei geschlossenem Pilotventil (20) ein auf das Ventilelement (6) wirkender Schließdruck bildet, ist zwischen dem Gehäuse (2) und dem Ventilelement (6) angeordnet.

## Beschreibung

Die Erfindung betrifft ein Axialventil mit einem Gehäuse, einem Eingang, einem Ausgang, einem Ventilsitz zwischen Eingang und Ausgang und einem mit dem Ventilsitz zusammenwirkenden Ventilelement, das durch ein zwischen dem Eingang und dem Ausgang angeordnetes Pilotventil gesteuert ist, wobei das Ventilelement parallel zu einem Strömungspfad vom Eingang zum Ausgang bewegbar ist und einen Innenraum umgibt.

Bei einem derartigen Axialventil, das von der Danfoss A/S, Nordborg, Dänemark, vertrieben wird, ist das Ventilelement in einem Käfig geführt, der zwischen dem Einlaß und dem Auslaß angeordnet ist. Das Ventilelement ist hohl. In dem Hohlraum ist eine Feder aufgenommen, die das Ventilelement in Axialrichtung aus dem Käfig herausdrückt und in Anlage an den Ventilsitz bringt. Wenn das Ventilelement vom Ventilsitz abgehoben wird, dann strömt das zu steuernde Fluid außen um den Käfig und außen um das Ventilelement herum, um durch den Ventilsitz zum Ausgang abzufließen.

Ein derartiges Ventil hat sich im Grunde bewährt. Allerdings ist eine Vergrößerung des Durchflusses nur beschränkt möglich, wenn man die Außenabmessungen beibehalten möchte.

Der Erfindung liegt die Aufgabe zugrunde, einen größeren Durchfluß bei unveränderten Außenabmessungen zu erreichen.

Diese Aufgabe wird bei einem Axialventil der eingangs genannten Art dadurch gelöst, daß ein erster Abschnitt des Strömungspfads durch den Innenraum geführt ist und ein Druckraum, in dem sich bei geschlossenem Pilotventil ein auf das Ventilelement wirkender Schließdruck bildet, zwischen dem Gehäuse und dem Ventilelement angeordnet ist.

Man ändert also den Strömungspfad für das Fluid. Das Fluid wird nicht mehr außen um das Ventilelement herumgeführt, sondern durch das Ventilelement hindurch. Wenn das Pilotventil geöffnet wird, werden Druckverhältnisse erzeugt, die zum Öffnen des Ventils, d.h. zum Abheben des Ventilelements vom Ventilsitz führen. Das Pilotventil steuert dabei das gleiche Fluid, das durch das Ventil an sich gesteuert werden soll. Dies vereinfacht die Bedienung des Ventils. Das Ventilelement wird in einer Gehäusebohrung geführt, d.h. man kann den Außendurchmesser des Ventilelements ganz erheblich vergrößern, so daß eine entsprechende Vergrößerung des Innenraums möglich ist. Die Vergrößerung des Innenraums stellt wiederum einen relativ großen Strömungsquerschnitt zur Verfügung, so daß das Ventil, wenn es geöffnet ist, einen nur ausgesprochen geringen Druckabfall erzeugt. Dadurch, daß der Druckraum zwischen dem Gehäuse und dem Ventilelement angeordnet ist, ist es möglich, das Ventilelement rotationssymmetrisch auszubilden. Dies vereinfacht die Fertigung. Die winkelmäßige Ausrichtung des Ventilelements zum Gehäuse muß nicht mehr überwacht werden.

Auch ist bevorzugt, daß das Ventilelement mit einer Wand des Innenraums auf einer Führung geführt ist, die einen zweiten Abschnitt des Strömungspfades umgibt. Damit hat der Hohlraum, der nun zum Ausbilden des Strömungspfades dient, eine zweite Aufgabe. Er dient nämlich gleichzeitig dazu, das Ventilelement auf der Führung zu führen. Damit ist es nicht mehr erforderlich, die Führung nach Art eines Käfigs in den Strömungsweg des Fluids zu legen. Man kann die Führung vielmehr freier ausgestalten.

Hierbei ist bevorzugt, daß die Führung gehäusefest angeordnet ist. Dies ergibt eine erhöhte Stabilität für die Führung des Ventilelements. Die Führung kann beispielsweise als Einsatz ausgebildet sein, der in ein Gehäuse des Ventils eingesetzt und dort fixiert ist.

Bevorzugterweise verläuft der Strömungspfad durch den Ventilsitz hindurch. Der Ventilsitz umgrenzt also, wie dies herkömmlicherweise bekannt ist, eine Öffnung, die als Abfluß für das Fluid dient, das durch das Ventil gesteuert wird. Der Ventilsitz bildet also keinen zusätzlichen Strömungswiderstand wie beispielsweise eine Platte, die mitten im Strömungsweg angeordnet und vom Fluid umströmt werden muß.

Vorzugsweise weist das Ventilelement an seiner dem Ventilsitz zugewandten Seite eine geschlossene Fläche auf. Diese Fläche verschließt dann die Öffnung, die vom Ventilsitz umschlossen ist. Dies vereinfacht die Steuerung und die Ausbildung des Ventilelements.

Vorzugsweise ist vorgesehen, daß das Ventilelement dichtungsfrei in einer Gehäusebohrung geführt ist. Die Kräfte, die man zum Bewegen des Ventilelements benötigt, werden klein gehalten. Man verzichtet nämlich auf eine Dichtung zwischen dem Ventilelement und dem Gehäuse. Ein Axialventil der infrage stehenden Art benötigt zum Öffnen einen Differenzdruck zwischen dem Eingang und dem Ausgang. Durch den Verzicht auf eine Dichtung zwischen dem Ventilelement und der Gehäusewand reichen nun sehr geringe Differenzdrücke aus, weil das Ventilelement praktisch reibungsfrei oder jedenfalls mit nur sehr geringen Reibungen im Gehäuse verlagert werden kann. Damit kann das Ventilelement auch dann bewegt werden, wenn der Differenzdruck zwischen Eingang und Ausgang nur sehr klein ist. Dies ist insbesondere bei Axialventilen von Vorteil, die mit Hilfe eines Pilotventils gesteuert werden, weil das Pilotventil die gleiche Flüssigkeit oder das gleiche Fluid steuert, das auch durch das Zusammenwirken zwischen dem Ventilelement und dem Ventilsitz gesteuert werden soll. Durch den Verzicht auf eine Dichtung zwischen dem Ventilelement und dem Gehäuse ergeben sich zwar kleinere Undichtigkeiten, die aber dadurch aufgefangen werden können, daß man eine Dichtung an anderer Stelle vorsieht, beispielsweise an der Stirnseite des Ventilelements. Im Endeffekt läßt sich also das Axialventil mit gleicher Dichtigkeit, aber verbesserten Eigenschaften dadurch bereitstellen, daß man die Strömung des Fluids durch das Ventilelement hindurch leitet.

Vorzugsweise ist das Pilotventil in einer Verbindung zwischen einem Druckraum, in dem ein in Schließrichtung auf das Ventil herrschender Druck herrscht, und dem Ausgang angeordnet. Wenn das Pilotventil öffnet, dann wird der Druck in dem Druckraum auf den Druck am Ausgang abgesenkt. Auf das Ventilelement wirkt dann in entgegengesetzter Richtung der Druck am Eingang, der das Ventilelement in Öffnungsrichtung bewegt. Dies ist eine relativ einfache Möglichkeit, das Ventilelement anzusteuern.

Bevorzugterweise ist der Druckraum über einen Sickerpfad mit Druck versorgt, der mit dem Innenraum in Verbindung steht. Der Sickerpfad kann zwar durch eine ausgeprägte Oberflächenstruktur zwischen dem Ventilelement und dem Gehäuse bzw. dem Ventilelement und der Führung gebildet werden. Dies ist aber in der Regel nicht notwendig. In den meisten Fällen läßt sich das Ventilelement nicht so spielfrei an das Gehäuse oder die Führung anpassen, daß die Anlage absolut dicht ist. Durch das Spiel zwischen dem Ventilelement und dem Gehäuse oder der Führung kann eine ausreichende Flüssigkeitsmenge in den Druckraum vordringen, die dann zum Schließen des Ventils dient. Da dieser Druckraum außen am Ventilelement angeordnet ist, steht eine relativ große Fläche zur Verfügung. Die Kraft, mit der das Ventilelement gegen den Ventilsitz gedrückt wird, steigt damit. Dies ergibt eine zuverlässige Ventilfunktion, weil das Ventil mit einer größeren Kraft schließt.

Vorzugsweise verkürzt sich der Sickerpfad beim Öffnen des Ventils. Dies erleichtert es, das Ventilelement in die Schließstellung zu bewegen. Man muß lediglich das Pilotventil schließen. Durch die kürzere Strecke des Sickerpfades, die bei der Öffnungsstellung des Ventilelements besteht, hat das Fluid einen geringeren Widerstand beim Durchtritt zum Druckraum zu erwarten. Der Druckraum füllt sich entsprechend schneller und bewegt dann das Ventilelement in die Schließstellung.

Vorzugsweise ist eine in Schließrichtung wirkende Feder im Druckraum angeordnet. Diese Feder unterstützt die Schließbewegung. Die Öffnungsbewegung wird durch den Druck am Eingang hervorgerufen, der entsprechend auf eine größere Fläche wirken muß. Hier zeigt sich erneut der Vorteil der erfindungsgemäßen Ausbildung des Ventilelements. Dadurch, daß das Ventilelement in seinem hohlen Innenraum geführt ist, kann der Druck am Eingang auf eine relativ große Fläche wirken und eine dementsprechend große Kraft erzeugen. Damit ist es möglich, eine wesentlich stärkere Feder als bisher zu verwenden, damit das Ventil fester schließt. Das Verwenden einer stärkeren Feder wird, wie gesagt, ermöglicht, weil die Druckkräfte beim Ventilelement auf eine Fläche mit größerem Durchmesser wirken. Eine stärkere Feder ergibt eine zuverlässigere Ventilfunktion.

In einer bevorzugten Ausgestaltung ist vorgesehen, daß die Führung auf der Einlaßseite des Ventilelements angeordnet ist. Das Fluid wird also durch die Führung in das Ventilelement hineingeführt. Damit werden Störungen beim Übergang von der Führung in das Ventilelement klein gehalten.

In einer alternativen Ausgestaltung ist vorgesehen, daß die Führung auf der Auslaßseite des Ventilelements angeordnet ist. In diesem Fall weist das Ventilelement zweckmäßigerweise ein ausgeprägtes Verschlußstück auf, das mit dem Ventilsitz zusammenwirkt. Die Führung umgibt dabei den Ventilsitz.

Vorzugsweise weist das Ventilelement im Bereich der Führung eine Durchmesservergrößerung auf. Diese Durchmesservergrößerung verbessert die Ausrichtung des Ventilelements zur Führung. Vor allem gewährleistet sie aber, daß relativ große Druckangriffsflächen in Öffnungs- und in Schließrichtung zur Verfügung stehen, so daß das Ventilelement mit ausreichend großen Kräften gegen den Ventilsitz gedrückt wird.

Schließlich ist von Vorteil, wenn das Gehäuse im Bereich des Pilotventils eine radial gerichtete Vertiefung aufweist. Das Pilotventil kann bei dieser Ausgestaltung in das Gehäuse hinein verlagert werden. Dadurch werden Bohrungen gespart.

Die Erfindung wird im folgenden anhand von bevorzugten Ausführungsbeispielen in Verbindung mit der Zeichnung näher beschrieben. Hierin zeigen:
- Fig. 1: eine erste Ausführungsform eines Axialventils im geschlossenen Zustand,
- Fig. 2: das Axialventil von Fig. 1 im geöffneten Zustand,

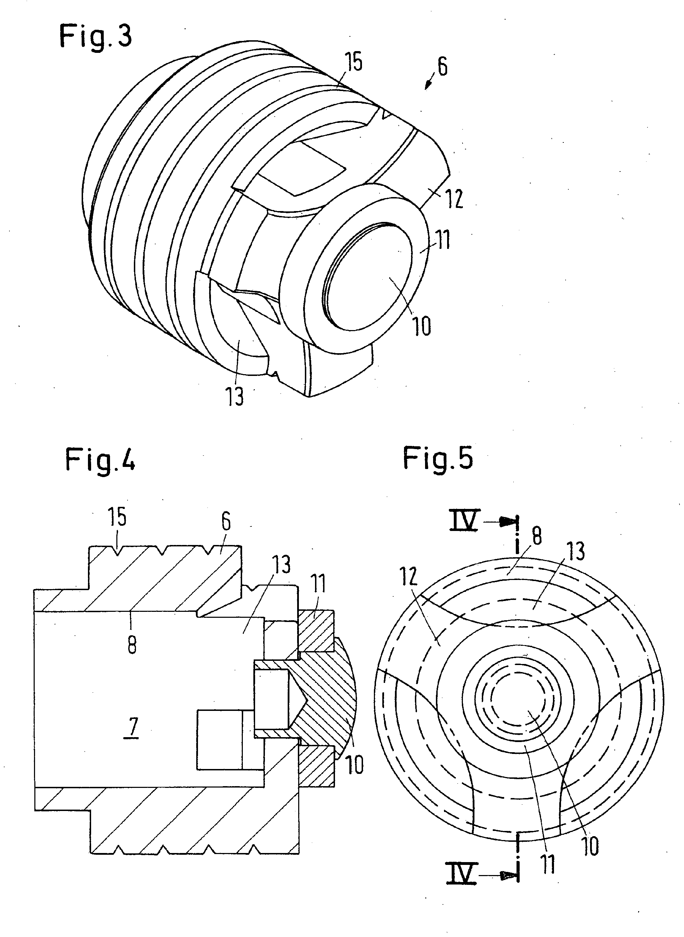

- Fig. 3: ein Ventilelement des Ventils nach Fig. 1 und 2 in perspektivischer Darstellung,
- Fig. 4: das Ventilelement im Längsschnitt IV-IV nach Fig. 5,
- Fig. 5: eine Stirnseitenansicht des Ventilelements,
- Fig. 6: eine zweite Ausführungsform eines Axialventils im geschlossenen Zustand,
- Fig. 7: das Axialventil der Fig. 6 in geöffnetem Zustand und
- Fig. 8: eine dritte Ausführungsform eines Axialventils im geschlossenen Zustand.

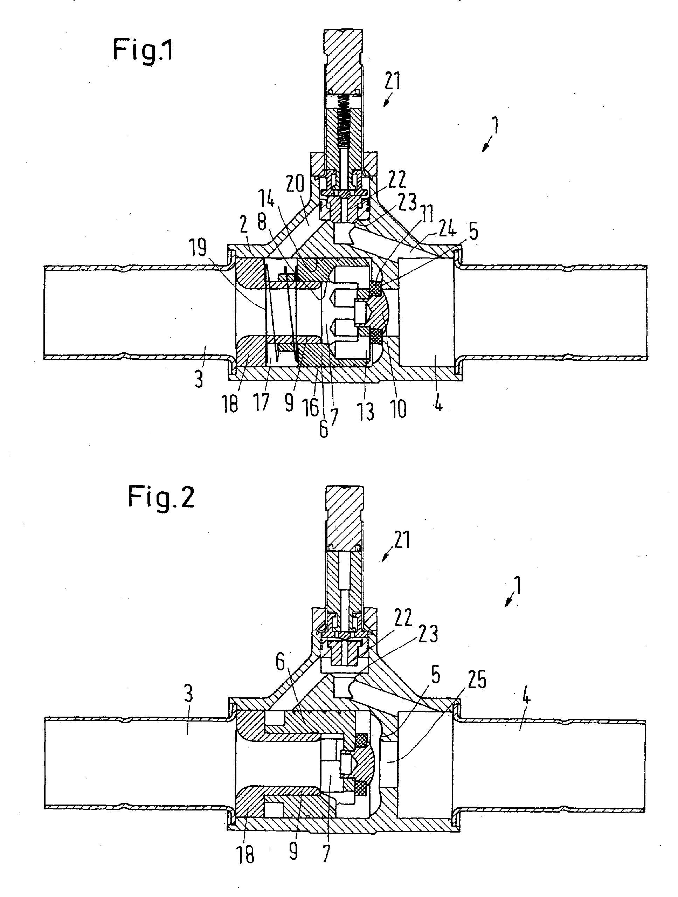

Die Fig. 1 und 2 zeigen ein Axialventil 1 mit einem Gehäuse 2, das einen Eingang 3 und einen Ausgang 4 aufweist. Zwischen dem Eingang 3 und dem Ausgang 4 ist ein Ventilsitz'5 angeordnet, mit dem ein Ventilelement 6 zusammenwirkt.

Das Ventilelement 6 weist einen hohlen Innenraum 7 auf. Der Innenraum 7 weist eine Wand 8 auf, mit der das Ventilelement 6 außen auf einer Führung 9 geführt ist, die gehäusefest im Gehäuse 2 angeordnet ist. Das Ventilelement 6 ist also teleskopierend auf der Führung gelagert. Die Führung 9 ist als Einsatz ausgebildet, der im Gehäuse 2 fixiert ist.

Das Ventilelement 6 weist an der Seite, die dem Ausgang 4 benachbart ist, eine geschlossene Fläche 10 auf, die von der Dichtung 11 umgeben ist, die letztendlich am Ventilsitz 5 zur Anlage kommt, wenn sich das Ventilelement 6 in der in Fig. 1 dargestellten Position befindet. Die Fläche 10 steht über sternförmige Stege 12 mit der Wand 8 in Verbindung. Zwischen den Stegen 12 sind Öffnungen 13 ausgebildet, durch die Fluid abfließen kann, das durch den Eingang 3 in den Innenraum 7 des Ventilelements 6 gelangt, wenn das Ventilelement 6 vom Ventilsitz 5 abgehoben ist, wie dies in Fig. 2 dargestellt ist.

Das Ventilelement 6 ist weiterhin in einer Bohrung 14 des Gehäuses geführt, deren Innendurchmesser praktisch genauso groß ist wie der Außendurchmesser des Ventilelements 6. Zwischen dem Ventilelement 6 und dem Gehäuse 2 sind keine Dichtungen angeordnet. Das Ventilelement 6 ist also dichtungsfrei und damit reibungsarm in der Bohrung 14 geführt. Durch umlaufende Nuten 15 am Ventilelement 6 ist angedeutet, daß zwischen dem Ventilelement 6 und der Bohrung 14 ein gewisses Spiel vorhanden ist, so daß ein "Sickerpfad" 16 gebildet ist, durch den Fluid durch den Innenraum 7 in einen ringförmigen Druckraum 17 gelangen kann, der begrenzt ist von der Führung 9, dem Ventilelement 6 und dem Gehäuse 2. Der "Sickerpfad" kann auch einen Abschnitt umfassen, der zwischen dem Ventilelement 6 und der Führung 9 im Bereich der Wand 8 gebildet ist. Die Führung 9 weist dabei ein verdicktes Ende 18 auf, dessen Außendurchmesser genauso groß ist wie der Innendurchmesser der Bohrung 14. Die konkrete Ausbildung des Sickerpfades spielt aber keine Rolle. Man kann auch gezielt Öffnungen oder Bohrungen an anderer Stelle vorsehen, beispielsweise durch das Ende 18 der Führung 9, um den Druckraum 17 mit Fluid zu versorgen.

In dem Druckraum 17 ist eine Feder 19 angeordnet, die das Ventilelement 6 in Schließrichtung beaufschlagt, das Ventilelement 6 also gegen den Ventilsitz 5 drückt.

Der Druckraum 17 steht über einen Kanal 20 mit einem Pilotventil 21 in Verbindung. Das Pilotventil 21 weist ein Pilotventilelement 22 auf, das mit einem Pilotventilsitz 23 zusammenwirkt. Der Pilotventilsitz 23 ist über einen Kanal 24 mit dem Ausgang 4 verbunden. Es handelt sich also um ein Servoventil, das mit Hilfe des Pilotventils 21 durch das gleiche Fluid aktiviert wird, das durch das Axialventil 1 gesteuert wird. Dadurch, daß das Ventilelement 6 dichtungsfrei in der Bohrung 14 des Gehäuses 2 geführt ist, ist die Reibung bei der Bewegung des Ventilelements außerordentlich gering. Dementsprechend reichen kleine Kräfte und damit geringe Differenzdrücke über das Ventilelement 6 aus, um es zu bewegen.

### Das Axialventil 1 arbeitet nun wie folgt:

Fluid, das durch den Eingang 3 zugeführt wird, gelangt durch die hohle Führung 9 in den Innenraum 7 des Ventilelements 6, kann aber nicht weiter abfließen, weil das Ventilelement 6 mit der Dichtung 11 am Ventilsitz 5 anliegt. Aufgrund des erhöhten Drucks am Eingang 3 dringt das Fluid durch den Sickerpfad 16 bis zum Druckraum 17 vor und zwar solange, bis ein Druckausgleich zwischen dem Eingang 3 und dem Druckraum 17 besteht. Durch den Druck im Druckraum 17 wird das Ventilelement 6 in Schließrichtung beaufschlagt. Zusätzlich wird das Ventilelement 6 durch die Kraft der Feder 19 in Schließrichtung beaufschlagt. Letztendlich wirkt auch der Druck im Eingang 3 noch auf die Stirnseite, die die Fläche 10 trägt, in Schließrichtung. In Öffnungsrichtung wirkt der Druck im Eingang auch und zwar über die in Öffnungsrichtung gerichteten Flächen. Dies ist im wesentlichen die Stärke der Ringwand des Ventilelements 6 plus die Flächen der Stege 12. Hierbei sind die in die eine und in die andere Richtung beaufschlagten Flächen so aufeinander abgestimmt, daß das Ventilelement 6 dann in Schließstellung bleibt, wenn im Druckraum 17 der Druck am Eingang 3 herrscht.

Wenn nun das Pilotventil 21 öffnet, entweicht der Druck aus dem Druckraum 17. Im Druckraum 17 herrscht dann praktisch der Druck am Ausgang 4. Der Druck am Eingang 3 ist dann in der Lage, das Ventilelement 6 vom Ventilsitz 5 abzuheben und in die in Fig. 2 dargestellte Position zu verschieben. Das Axialventil 1 ist damit geöffnet.

Für das Fluid entsteht ein Strömungspfad vom Eingang 3 zum Ausgang 4, der durch den Ventilsitz 5, genauer gesagt durch eine vom Ventilsitz 5 umgebene Öffnung 25 verläuft. Der Strömungspfad weist einen ersten Abschnitt auf, der im Innenraum 7 des Ventilelements 6 gebildet ist, und einen zweiten Abschnitt, der im hohlen Inneren der Führung 9 gebildet ist. In Strömungsrichtung gesehen ist die Reihenfolge der beiden Abschnitte natürlich umgekehrt.

Aus Gründen der Übersicht sind in Fig. 2 die Feder 19 und die Feder des Pilotventils 21 weggelassen. Das Pilotventilelement 22 ist vom Pilotventilsitz 23 abgehoben.

Das Ventilelement 6 ist bei dieser Ausgestaltung zweifach geführt, nämlich einmal auf der Führung 9 im Innenraum 7 und zum anderen in der Bohrung 14 im Gehäuse 2. Dadurch ist es auf einfache Weise möglich, den ringförmigen Druckraum 17 zu erzeugen.

Die Fig: 6 und 7 zeigen eine alternative Ausgestaltung, bei der gleiche und einander entsprechende Teile mit den gleichen Bezugszeichen versehen sind.

Während bei der Ausgestaltung nach Fig. 1 und 2 die Führung 9 in Strömungsrichtung vom Eingang 3 zum Ausgang 4 vor dem Ventilelement 6 angeordnet ist, befindet sich die Führung 9 nun in Strömungsrichtung hinter dem Ventilelement 6. Die Führung beinhaltet in diesem Fall den Ventilsitz 5, der bei der Ausgestaltung nach Fig. 1 und 2 noch Bestandteil des Gehäuses ist, aber auch dort in einem Einsatz ausgebildet sein kann.

Hier ist der Sickerpfad 16 zwischen dem Ventilelement 6 und der Führung 9 ausgebildet. Wie oben ausgeführt, kann der Sickerpfad auch an anderen Stellen ausgebildet sein, z.B. zwischen dem Fortsatz 26 und der Innenwand des Eingangs 3. Das Ventilelement 6 weist einen Fortsatz 26 auf, mit dem es im Gehäuse 2 geführt ist und zwar genauer gesagt im Eingang 3. Der Fortsatz 26 weist einen verminderten Durchmesser auf. Mit anderen Worten weist das Ventilelement 6 im Bereich der Führung 9 eine Durchmesservergrößerung auf.

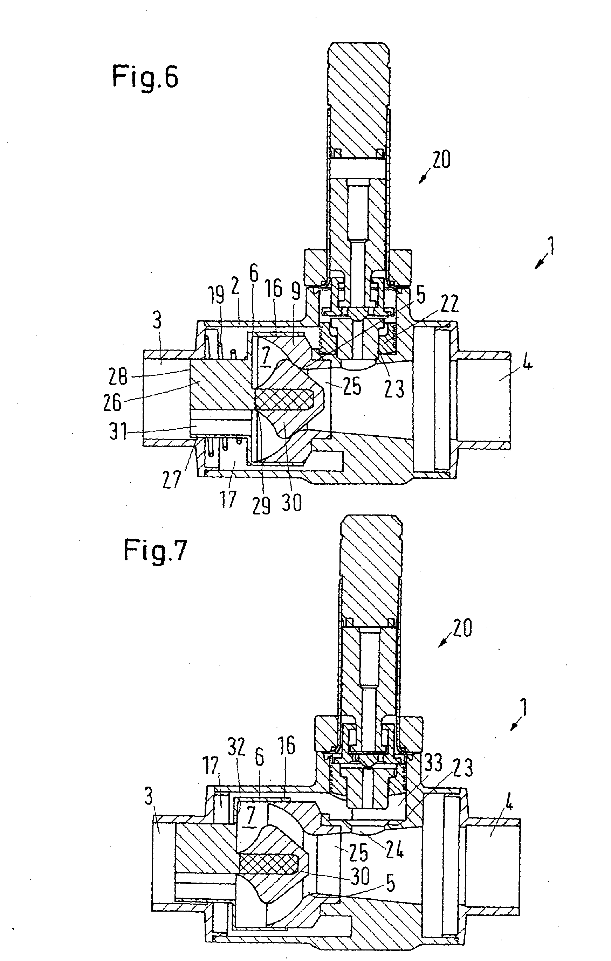

Der Fortsatz 26 weist eine ringförmige Wand 27 auf, mit der das Ventilelement 6 im Eingang 3 geführt ist, die über drei oder mehr Stege 28 mit einem Mittelteil 29 des Ventilelements 6 verbunden ist. Am Mittelteil 29 ist ein Schließelement 30 befestigt, das letztendlich am Ventilsitz 5 zur Anlage kommt, wenn das Ventilelement 6 sich in der in Fig. 6 dargestellten Position befindet. Zwischen den Stegen 28 sind Öffnungen 31 freigelassen, durch die Fluid aus dem Eingang 3 in den Innenraum 7 gelangen kann.

Fluid, das vom Eingang 3 über die Öffnungen 31 in den Innenraum 7 gelangt, dringt durch den Sickerpfad 16 in den Druckraum 17 vor und übt damit eine Schließkraft auf das Ventilelement 6 aus, die das Ventilelement 6 in die in Fig. 6 dargestellte Position drückt. Unterstützend wirken hierbei die Kraft der Feder 7 und der Druck des durch den Eingang 3 austretenden Fluids.

Wenn das Pilotventil 20 (bei der Darstellung der Fig. 6 und 7 fehlt eine Schließfeder des Pilotventils 20) geöffnet wird, dann hebt das Pilotventilelement 22 vom Pilotventilsitz 23 ab und der Druckraum 17 kommt über den Kanal 24 mit dem Ausgang 4 in Verbindung. Der Druck im Druckraum 17 sinkt. Der Druck am Eingang 3 wirkt dann in Öffnungsrichtung auf eine Fläche, die größer ist als die Fläche, in der der Druck am Eingang in Schließrichtung wirkt. Dies kann beispielsweise eine Fläche 32 sein, die vom Fortsatz 26 ausgeht. Das Ventilelement 6 wird dadurch in Öffnungsrichtung bewegt und das Schließelement 30 hebt vom Ventilsitz 5 ab. Dadurch wird die Öffnung 25 freigegeben und das Fluid kann vom Eingang 3 zum Ausgang 4 strömen.

Wenn das Pilotventil 20 geschlossen wird, dann kann sich im Druckraum 17 wiederum ein Druck aufbauen. Der Druckaufbau kann im Falle eines geöffneten Ventilelements 6 relativ schnell erfolgen, weil der Sickerpfad 16 hier gegenüber der geschlossenen Stellung des Ventilelements 6 verkürzt ist, wie ein Vergleich der Fig. 6 und 7 zeigt. Das Ventilelement 6 wird also relativ schnell in Schließrichtung bewegt, wodurch das Schließelement 30 zur Anlage an dem Ventilsitz 5 gelangt.

Im Gegensatz zu der Ausbildung der Fig. 1 und 2 weist das Gehäuse 2 bei der Ausführungsform der Fig. 6 und 7 eine Vertiefung 33 auf, in der das Pilotventilelement 22 bewegbar ist. Am Fuß der Vertiefung 33 befindet sich dann der Pilotventilsitz 23. Diese Ausgestaltung hat den Vorteil, daß sich einerseits die Bauhöhe des Ventils 1 vermindert. Andererseits werden Bohrungen und zusätzliche Kanäle im Gehäuse 2 gespart, beispielsweise der Kanal 20.

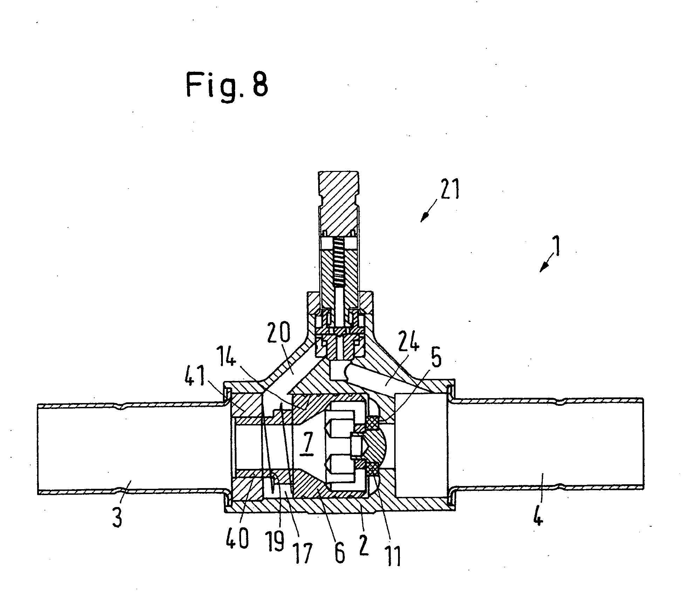

Fig. 8 zeigt eine weitere Ausführungsform eines Axialventils, die im wesentlichen der Ausführungsform nach Fig. 1 entspricht. Gleiche Teile wie in Fig. 1 sind mit den gleichen Bezugszeichen versehen.

Im Unterschied zu der Ausführungsform nach Fig. 1 ist das Ventilelement 6 nicht nur im Bereich der Wand 8 des Gehäuses 2 an seinem Außenumfang geführt, sondern auch an einem verjüngten Abschnitt 40, der von einer Gehäuseführung 41 umgeben ist. Im übrigen ist die Funktion und der Aufbau des Axialventils 1 gleich wie bei der Ausführungsform nach Fig. 1. Auch hier ist das Ventilelement 6 dichtungsfrei in der Gehäusebohrung 14 angeordnet, d.h. es reichen außerordentlich kleine Differenzdrücke zwischen dem Eingang 3 und dem Ausgang 4 aus, um das Ventilelement 6 vom Ventilsitz 5 abzuheben, wenn das Pilotventil 21 geöffnet wird.

## Patentansprüche

1. Axialventil mit einem Gehäuse, einem Eingang, einem Ausgang, einem Ventilsitz zwischen Eingang und Ausgang und einem mit dem Ventilsitz zusammenwirkenden Ventilelement, das durch ein zwischen dem Eingang und dem Ausgang angeordnetes Pilotventil gesteuert ist, wobei das Ventilelement parallel zu einem Strömungspfad vom Eingang zum Ausgang bewegbar ist und einen Innenraum umgibt, **dadurch gekennzeichnet, daß** ein erster Abschnitt des Strömungspfads durch den Innenraum (7) geführt ist und ein Druckraum (17), in dem sich bei geschlossenem Pilotventil (20) ein auf das Ventilelement (6) wirkender Schließdruck bildet, zwischen dem Gehäuse (2) und dem Ventilelement (6) angeordnet ist.

2. Ventil nach Anspruch 1, **dadurch gekennzeichnet, daß** das Ventilelement (6) mit einer Wand (8) des Innenraums (7) auf einer Führung (9) geführt ist, die einen zweiten Abschnitt des Strömungspfades umgibt.

3. Ventil nach Anspruch 2, **dadurch gekennzeichnet, daß** die Führung (9) gehäusefest angeordnet ist.

4. Ventil nach einem der Ansprüche 1 bis 3, **dadurch gekennzeichnet, daß** der Strömungspfad durch den Ventilsitz (5) hindurch verläuft.

5. Ventil nach einem der Ansprüche 1 bis 4, **dadurch gekennzeichnet, daß** das Ventilelement (6) an seiner dem Ventilsitz (5) zugewandten Seite eine geschlossene Fläche (10) aufweist.

6. Ventil nach einem der Ansprüche 1 bis 5, **dadurch gekennzeichnet, daß** das Ventilelement (6) dichtungsfrei in einer Gehäusebohrung (3, 14) geführt ist.

7. Ventil nach einem der Ansprüche 1 bis 6, **dadurch gekennzeichnet, daß** das Pilotventil (21) in einer Verbindung zwischen einem Druckraum (17), in dem ein in Schließrichtung auf das Ventilelement (6) herrschender Druck herrscht, und dem Ausgang (4) angeordnet ist.

8. Ventil nach Anspruch 7, **dadurch gekennzeichnet, daß** der Druckraum (17) über einen Sickerpfad (16) mit Druck versorgt ist, der mit dem Innenraum (7) in Verbindung steht.

9. Ventil nach Anspruch 8, **dadurch gekennzeichnet, daß** sich der Sickerpfad (16) beim Öffnen des Ventils verkürzt.

10. Ventil nach einem der Ansprüche 7 bis 9, **dadurch gekennzeichnet, daß** eine in Schließrichtung wirkende Feder (19) im Druckraum (17) angeordnet ist.

11. Ventil nach einem der Ansprüche 2 bis 10, **dadurch gekennzeichnet, daß** die Führung (9) auf der Einlaßseite des Ventilelements (6) angeordnet ist.

12. Ventil nach einem der Ansprüche 2 bis 10, **dadurch gekennzeichnet, daß** die Führung (9) auf der Auslaßseite des Ventilelements (6) angeordnet ist.

13. Ventil nach Anspruch 12, **dadurch gekennzeichnet, daß** das Ventilelement (6) im Bereich der Führung (9) eine Durchmesservergrößerung aufweist.

14. Ventil nach Anspruch 12 oder 13, **dadurch gekennzeichnet, daß** das Gehäuse (2) im Bereich des Pilotventils (21) eine radial gerichtete Vertiefung (33) aufweist.
